# EUROPEAN PATENT SPECIFICATION

(11) **EP 1 035 244 B1**
(45) Date of publication and mention of the grant of the patent: **28.09.2005**
(21) Application number: 98953078.7
(22) Date of filing: 17.11.1998
(51) Int. Cl.: D04H 3/10, D04H 1/54, D04H 3/14, B32B 5/26

(54) **KITCHEN SHEET**
KÜCHENFOLIE
FEUILLE DE CUISINE

(30) Priority: 28.11.1997 JP 32906797; 28.11.1997 JP 32906897; 28.11.1997 JP 32906997
(43) Date of publication of application: 13.09.2000
(73) Proprietor: KAO CORPORATION, Tokyo 103-0025 (JP)
(72) Inventor: SATO, Nobuya, Kao Corporation, Research Lab., Haga-gun, Tochigi 321-3426 (JP); SAKAHASHI, Haruo, Kao Corporation, Research Lab., Haga-gun, Tochigi321-i3426 (JP); MATSUDA, Masahito, Kao Corporation, Research Lab., Haga-gun, Tochigi 321-3426 (JP)
(74) Representative: HOFFMANN EITLE
(86) International application number: PCT/JP1998/005167
(87) International publication number: WO 1999/028545

(56) References cited:
- EP-A- 0 006 264
- EP-A- 0 586 936
- WO-A-97/31145
- JP-A- 1 239 149
- JP-A- 10 018 154
- JP-A- 55 040 884
- US-A- 4 041 203
- US-A- 4 374 888
- US-A- 5 073 346

## Description

### Technical Field:

The present invention relates to a kitchen sheet having a diversity of uses. More particularly, it relates to a kitchen sheet having a diversity of uses, for example, in cooking or defrosting food in a microwave oven, wrapping food such as vegetables for preservation in a refrigerator, wrapping meat, fish, etc. for preservation in a freezer, steaming food in a steamer, etc., draining off food, absorbing impurities or fat exuded from food in boiling, filtering oil, absorbing fat and oil, washing dishes, wiping a sink and a stove with a light scouring effect, and protecting dishes, etc. from breakage while stored, and as a draining sheet to remove water from garbage before discarding, as a filter of a ventilation fan, and so forth; and a process for producing the same.

### Background Art:

In microwaving cooked food for re-heating or microwaving preserved cooked food, such as frozen food, for cooking, where the food is placed directly in a container, e.g., a plate, there has been the problem that the water vapor from the food is condensed into water on the plate, with which the food is swollen and, as a result, the texture is adversely affected. To avoid this, a paper towel and the like can be put between the container and the food so that the paper towel may absorb condensation to prevent the food from getting swollen.

As for steaming food, Japanese Patent Application Laid-Open No. 154573/92 proposes a food wrapping article having a prescribed water pressure resistance and a prescribed air permeability, describing that steamed an-man, etc. can conveniently be re-heated in the wrapping article. However, the number of the pieces of food or the size of food that can be heated is limited by the kind of the food so that the article, while convenient for some specified foods, can hardly cope with unspecified forms of foods.

When a vegetable is kept in a refrigerator, it is wrapped in a plastic film or put into a plastic bag. However, since these materials have poor breathability, water vapor condenses on the surface of the film or bag, and the water droplets gather into water to putrefy the vegetable.

Any of the state-of-the-art sheet articles, while excellent in performing a single function, is not susceptible of wide applications.

US 5,073,436 discloses multi-layer laminates of nonwoven fabrics having water repellency and water vapor permeability properties suitable for apparel applications.

US 4,041,203 describes a nonwoven fabric-like material comprising an integrated mat of generally discontinuous, thermoplastic polymeric microfibers and a web of substantially continuous filaments of a thermoplastic polymer which can be used as wrappers or containment fabrics for surgical or other health care products.

EP 0 006 264 describes a composite nonwoven fabric for use in disposable of surgical items comprising at least two meltblown hydrophobic layers of microfibers and a nonwoven cover layer.

### Disclosure of the Invention:

Accordingly, an object of the present invention is to provide a kitchen sheet having a diversity of uses in cooking or defrosting food in a microwave oven, wrapping food such as vegetables for preservation in a refrigerator, wrapping meat, fish, etc. for preservation in a freezer, steaming food in a steamer, etc., draining off food, absorbing impurities or fat exuded from food in boiling, filtering oil, absorbing fat and oil, washing dishes, wiping a sink and a stove with a light scouring effect, and protecting dishes, etc. from breakage while storage, and as a draining sheet to remove water from garbage before discarding, as a filter of a ventilation fan, and so forth.

As a result of extensive studies, the present inventors have found that the above object is accomplished by a sheet which comprises a base sheet comprising a fiber aggregate having a specific air permeability, the base sheet having been made uneven to have a specific apparent thickness, and which has a specific compressive recovery.

The present invention has been completed based on the above finding and provides a kitchen sheet characterized by comprising a base sheet comprising a fiber aggregate having an air permeability of from 5 to 400 cc/cm²/sec as measured in accordance with JIS L1096A, a basis weight of from 10 to 100 g/m², and said base sheet having been shaped to unevenness in the form of concavities being connected with each other and convexities having peaks separated by 3.5 to 25 mm, giving said kitchen sheet a height of unevenness of three to twenty times the thickness of the base sheet, an apparent thickness of 1.0 mm or greater and a compressive recovery of 30 % or more.

The present invention also provides a process for producing a kitchen sheet comprising superposing a nonwoven fabric of a thermoplastic resin on at least one side of a sheet of a nonwoven fabric comprising an ultrafine hydrophobic fiber to obtain a base sheet having a water pressure resistance of 100 mm H₂O or more and less than 500 mm H₂O as measured in accordance with JIS L1092, an air permeability of from 5 to 400 cc/cm²/sec as measured in accordance with JIS L1096A and a basis weight of from 10 to 100 g/m², and embossing the base sheet to impart unevenness in the form of concavities being connected with each other and convexities having peaks separated by 3.5 mm to 25 mm, giving said kitchen sheet a height of unevenness of three to twenty times the thickness of the base sheet, an apparent thickness of 1.0 mm or greater and a compressive recovery of 30 % or more.

The present invention also provides a process for producing a kitchen sheet comprising superposing a nonwoven fabric of a thermoplastic resin on at least one side of a sheet of a nonwoven fabric comprising an ultrafine hydrophobic fiber to obtain a base sheet having a water pressure resistance of 500 mm H₂O or more as measured in accordance with JIS L 1092, an air permeability of from 5 to 400 cc/cm²/sec as measured in accordance with JIS L1096A and a basis weight of from 10 to 100 g/m², and embossing the base sheet to impart unevenness in the form of concavities being connected with each other and convexities having peaks separated by 3.5 mm to 25 mm, giving said kitchen sheet a height of unevenness of three to twenty times the thickness of the base sheet, an apparent thickness of 1.0 mm or greater and a compressive recovery of 30 % or more.

### Best Mode for Carrying out the Invention:

The kitchen sheet of the present invention will be described below in detail.

The kitchen sheet of the present invention comprises a base sheet comprising a fiber aggregate having an air permeability measured according to JIS L1096A (hereinafter simply referred to as an air permeability) of from 5 to 400 cc/cm²/sec and a basis weight of from 10 to 100 g/m². The base sheet has been shaped to have unevenness so as to have concavities being connected with each other and convexities having peaks separated by 3.5 to 25 mm, giving said kitchen sheet a height of unevenness of three to twenty times the thickness of the base sheet, an apparent thickness of 1.0 mm or greater and a compressive recovery of 30 % or more.

The terminology "compressive recovery" denotes a compressive recovery R (R(%)=(Wc'/Wc)x100) which is obtained from the work done in compressing Wc (gfcm/cm²) and the work done in recovering from compression Wc' (gfcm/cm²) when a sheet is compressed by applying a load of 50 gf/cm² at a stroke speed of 50 sec/min by use of KES-TB3 supplied by Katotec, Inc.

The base sheet which constitutes the kitchen sheet of the present invention and comprises a fiber aggregate has an air permeability of from 5 to 400 cc/cm²/sec. When the kitchen sheet is used, e.g., in cooking or wrapping food, water vapor generated from the food can be dissipated because the base sheet has an air permeability of from 5 to 400 cc/cm²/sec. If the air permeability of the base sheet is less than 5 cc/cm²/sec, condensation tends to collect on the kitchen sheet.

The higher the air permeability of the base sheet, the more suitable is the kitchen sheet as a filter of a ventilation fan or for use in steaming food in a steamer, re-heating in a microwave oven, and the like. However, with applicability to various uses being taken into consideration, the air permeability is 5 to 400 cc/cm²/sec, preferably 30 to 200 cc/cm²/sec.

When the kitchen sheet is used to wrap food for pre-cooking in a microwave oven or to wrap a vegetable for preserving, too high an air permeability may let too much water evaporate from the food. Therefore, for use in pre-cooking in a microwave oven or for wrapping vegetables to be preserved, it is preferred for the base sheet to have an air permeability of 5 to 50 cc/cm²/sec.

The base sheet comprises a fiber aggregate having the above-described air permeability, the fiber material of the fiber aggregate being preferably hydrophobic fiber (particularly lipophilic fiber).

For the fiber material to be hydrophobic fiber is advantageous in that the resulting kitchen sheet, not absorbing water, is not wetted with water vapor, etc. coming from food while cooked, especially while re-heated in a microwave oven, so that the bottom of the food may be kept dry. There is another advantage that the preparation of the fiber aggregate is simple because the fiber aggregate as prepared needs no surface treatment, etc. To use hydrophobic fiber is also favorable for adsorption of impurities, fat, etc. oozed from food while boiled.

Examples of the hydrophobic fibers are polyolefin resins, such as polyethylene and polypropylene, polyester resins, such as polyethylene terephthalate and polybutylene terephthalate, and copolymers thereof. Preferred among them are polyolefin resins, particularly polypropylene, from the standpoint of heat resistance and enhanced surface tension in microwaving, enhanced water pressure resistance, enhanced air permeability, and high lipophilic properties.

Hydrophilic fibers, such as rayon and cotton, and fibrous materials for papermaking, such as pulp, are also employable as the fiber material. Where the fiber aggregate is a laminate as hereinafter described, water- and oil-absorbing fiber can be used as an inner layer constituting the laminate to trap fat and water oozing from food.

These fiber materials can be used either singly or as a mixture of two or more thereof.

The above-described fiber materials preferably have an average fiber diameter of 0.1 to 100 µm, particularly 1 to 50 µm, especially 1 to 30 µm.

Nonwoven fabric is preferably used as the fiber aggregate. Nonwoven fabric made up of fibers having an average fiber diameter of 0.1 to 100 µm (preferably 1 to 50 µm) is particularly preferred. Use of such nonwoven fabric makes it easy to control the air permeability of the base sheet and the compressive recovery of the resulting kitchen sheet within the prescribed ranges.

Adoptable methods for preparing the nonwoven fabric include spun bonding, spun lacing, melt blowing and flash spinning. While the air-through method, thermal bonding using a heat roll, needle punching, and the like are also employable, these methods needs such a manipulation as the choice of the textile oil from among those useful as food additives.

The nonwoven fabric to be used preferably includes one comprising an ultrafine hydrophobic fiber (hereinafter referred to as an ultrafine hydrophobic fiber nonwoven fabric).

The hydrophobic fibers making up the ultrafine hydrophobic fiber nonwoven fabric preferably have an average fiber diameter of from 0.1 to 10 µm, particularly 0.1 to 5 µm.

Use of the ultrafine hydrophobic fiber nonwoven fabric makes it easy to control the air permeability of the base sheet within a prescribed range and to control the water pressure resistance of the base sheet within a preferred range. Further, because the fiber material of the nonwoven fabric has an increased total surface area, the kitchen sheet has an increased oil absorption and is therefore specially useful in applications requiring a certain degree of oil absorption, e.g., fat and oil absorption, skimming off fat and impurities, and heating deep-fried food in a microwave oven.

The ultrafine hydrophobic fiber nonwoven fabric can be prepared by melt blowing, flash spinning, or a like method.

The above-mentioned fiber aggregate can have a single layer structure comprising fiber of a kind or two or more different kinds or a laminate structure having two or more layers which may be the same or different. For example, the fiber aggregate may have a single layer structure, such as a single sheet comprising the above-described fiber nonwoven fabric or ultrafine hydrophobic fiber nonwoven fabric (i.e., a uniform sheet obtained by a given process) or a laminate structure having two or more layers of nonwoven fabrics obtained by different processes.

In using a laminate having two or more layers as a fiber aggregate, it is preferred that the fiber material of the surface layer constituting the laminate be hydrophobic. The term "surface layer" as used herein is intended to mean the layer which constitutes the outer face of the kitchen sheet of the present invention.

The laminate can be produced by, for example, joining the layers into a unitary body by partial heat fusion.

Where the resulting kitchen sheet is intended to be used in contact with food, it is preferred that the side of the fiber aggregate to be brought into contact with food be composed of a layer of nonwoven fabric made of hydrophobic fiber. Where liquid absorbing properties are required as in fat and oil absorption, nonwoven fabric made of hydrophobic fiber may be combined with paper or nonwoven fabric made of water- and oil-absorbing fiber such as rayon.

Paper laminated with hydrophobic fiber nonwoven fabric on both sides thereof is convenient and preferred because the resulting laminate has no right side nor wrong side.

In order for the kitchen sheet of the present invention to be applicable to multiple purposes, it is preferred to use, as a base sheet, a laminate comprising a sheet of the above-described ultrafine hydrophobic fiber nonwoven fabric having provided on at least one side thereof nonwoven fabric comprising a thermoplastic resin (hereinafter referred to as thermoplastic resin nonwoven fabric). According to the use, a laminate of a combination of (A) hydrophobic fiber nonwoven fabric, (B) water- and oil-absorbing nonwoven fabric, e.g., of rayon, pulp or cotton, and (C) ultrafine hydrophobic fiber nonwoven fabric, such as A/B/C or A/B/C/B/A, is also useful.

The fiber material which can be used in the thermoplastic resin nonwoven fabric depends, as described below, on whether (1) the resulting kitchen sheet is designed to have no right nor wrong side or (2) the resulting kitchen sheet is designed to have the right and the wrong sides. For the kitchen sheet to have no right nor wrong side means that both sides of the sheet are either hydrophobic or hydrophilic.

In the case (1) wherein the resulting kitchen sheet is designed to have no right nor wrong side, the thermoplastic resin nonwoven fabric to be used is preferably one made of hydrophobic fiber as a fiber material (hereinafter referred to as hydrophobic nonwoven fabric). The hydrophobic fibers which can be used here include polyolefin resins, such as polyethylene and polypropylene, polyester resins, such as polyethylene terephthalate and polybutylene terephthalate, and copolymers thereof In this case, the hydrophobic nonwoven fabric is provided on both sides of the ultrafine hydrophobic fiber nonwoven fabric.

On the other hand, in the case (2) wherein the resulting kitchen sheet has the right and the wrong sides, one of the sides could be of hydrophobic fiber with the other being of hydrophilic fiber. Accordingly, there is given a wider choice of fiber materials to be used in the thermoplastic resin nonwoven fabric than in the case (1). Examples of the fiber materials useful in the thermoplastic resin nonwoven fabric include hydrophilic fibers, such as rayon and cotton; and hydrophobic fibers, such as polyamide, e.g., nylon, polyolefin resins, e.g., polyethylene and polypropylene, polyester resins, e.g., polyethylene terephthalate and polybutylene terephthalate, and copolymers thereof.

The fiber material of the thermoplastic resin nonwoven fabric preferably has an average fiber diameter of from 8 to 100 µm, particularly 12 to 100 µm, especially 50 to 100 µm, taking into consideration dishwashing performance or wiping performance with a light scouring effect expected. With the fiber diameter being smaller than 8 µm, it is difficult to obtain dishwashing performance or wiping performance with a light scouring effect expected. On the other hand, if the diameter exceeds 100 µm, a large quantity of a material which contributes to a certain fiber density would be required, leading to an increase of cost.

Adoptable methods for preparing the thermoplastic resin nonwoven fabric include spun bonding and spun lacing. While the air-through method, thermal bonding using a heat roll, needle punching, and the like are also employable, these methods needs such a manipulation as the choice of the textile oil from among those useful as food additives.

It is not particularly essential for the ultrafine hydrophobic fiber nonwoven fabric used in the laminate to possess shapability to have unevenness and shape retention because it is supported on the thermoplastic resin nonwoven fabric so that the laminate as a whole may secure shapability to have unevenness and shape retention as required. What is required of the ultrafine hydrophobic fiber nonwoven fabric is to have controllability so as to provide the base sheet with the water pressure resistance and the air permeability ranging in the respective prescribed ranges.

In order for the kitchen sheet of the present invention to be applicable to multiple purposes, the base sheet can be a laminate comprising a sheet of hydrophobic nonwoven fabric having provided on both sides thereof the above-described ultrafine hydrophobic fiber nonwoven fabric.

Use of this laminate brings improvements on shapability to unevenness by embossing and shape retention of the resulting kitchen sheet and also makes it possible to control dishwashing effects or cleaning performance with a light scouring effect expected. Therefore, further effects are expected.

The description of the hydrophobic nonwoven fabric used as the aforementioned thermoplastic resin nonwoven fabric applies to the hydrophobic nonwoven fabric used in this laminate as to examples of the fiber material, the average fiber diameter, the process of production, and the like.

The above-mentioned various laminates which are used in the kitchen sheet of the present invention contemplated for multiple purposes can be obtained by any laminating method with no particular restriction. For example, (a) fiber materials for nonwoven fabrics forming layers are prepared beforehand, and they are directly joined on top of each other into a unitary body by melt blowing, or (b) nonwoven fabric webs forming individual layers are separately formed and joined on top of each other into one body, or spun-bond nonwoven fabric and melt-blown nonwoven fabric are prepared simultaneously and joined together into one body. Joining nonwoven fabric webs in the method (b) can be carried out by heat fusion (the nonwoven fabric webs forming the respective layers are thermally joined into one body) or with an adhesive, which is selected arbitrarily. In general, joining by heat fusion is preferred for workability. Where heat fusion is adopted for joining, in case where the fiber material of the ultrafine hydrophobic fiber nonwoven fabric is the preferred polypropylene, it is desirable for easy heat fusion to use hydrophobic nonwoven fabric comprising polypropylene.

Preferred examples of the above-described laminates used in the kitchen sheet contemplated for multiple purposes include those of a combination of polypropylene nonwoven fabric obtained by spun bonding (hereinafter referred to PP spun-bonded) as hydrophobic nonwoven fabric and PP melt-blown as ultrafine hydrophobic fiber nonwoven fabric. More specifically, laminates of various combinations shown below are preferred, being appropriately selected and designed according to the use.
PP spun-bonded/PP melt-blown/PP spun-bonded
PP spun-bonded/PP melt-blown/PP melt-blown/PP spun-bonded
PP spun-bonded/PP melt-blown
PP melt-blown/PP spun-bonded/PP melt-blown

Particularly preferred of them is PP spun-bonded/PP melt-blown/PP spun-bonded for its broad adaptability.

The basis weight of the base sheet comprising the above-described fiber aggregate is 10 to 100 g/m², more desirably 15 to 75 g/m², yet more desirably 20 to 75 g/m², particularly desirably 25 to 60 g/m², and most desirably 30 to 60 g/m². A base sheet having a basis weight less than 10 g/m² has poor shapability to unevenness and tends to be collapsed under the weight of food, which gives rise to problems such that: the passageways for letting water vapor from food escape are narrowed to cause swell of the food; drippings from frozen food on defrosting come into contact with the food; and water drops come into direct contact with a vegetable preserved as wrapped in the kitchen sheet with the unevenness collapsed. On the other hand, a base sheet having a basis weight exceeding 100 g/m² may increase the cost.

Taking flexibility for wrapping in food into consideration, the base sheet preferably has a thickness of 0.1 to 1.0 mm, particularly 0.1 to 0.5 mm.

The water pressure resistance of the base sheet is selected appropriately according to the use of the kitchen sheet of the invention. For use in steaming in, e.g., a microwave oven, a preferred water pressure resistance is 500 mmH₂O or higher. Microwave steaming is exemplified by a case in which water is put into a dish, a kitchen sheet comprising the base sheet having been shaped to prescribed unevenness is placed thereon, on which shaomai, gyoza, an-man, nikuman, cold rice, etc. is steamed.

With a higher water pressure resistance, the cooking time can be extended. Where a relatively long cooking time is needed, the water pressure resistance of the base sheet can be increased. In such a case, it is still preferred for the base sheet to have a water pressure resistance of 650 mmH₂O or higher.

Where the base sheet has a water pressure resistance of 500 mmH₂O or higher, the higher the air permeability of the base sheet, the more suitable as a filter of a ventilation fan or for use in steaming in a steamer or in re-heating in a microwave oven. From the standpoint of applicability to a diversity of uses, a preferred air permeability is from 5 to 100 cc/cm²/sec, particularly 5 to 50 cc/cm²/sec.

For use in microwave cooking such as steaming, it is demanded that the kitchen sheet wrapping the food has a steaming effect to some extent. Additionally, when food is precooked in a microwave oven with being wrapped in the kitchen sheet or when a wrapped vegetable is preserved, too much water content of the food may be evaporated through the kitchen sheet. Therefore, for use in microwave cooking such as steaming, microwave pre-cooking, or wrapping vegetables for preservation, it is preferred for the base sheet to have an air permeability of 5 to 10 cc/cm²/sec.

Where the base sheet has a water pressure resistance of 500 mmH₂O or higher, and, in particular, where the base sheet is a laminate containing the aforementioned ultrafine hydrophobic fiber nonwoven fabric, it is preferred for the ultrafine hydrophobic fiber nonwoven fabric to have a basis weight of 1 to 50 g/m², particularly 1 to 20 g/m²; for the aforementioned thermoplastic resin nonwoven fabric to have a basis weight of 3 to 30 g/m², particularly 3 to 15 g/m², and for the laminate as a whole to have a basis weight of 5 to 80 g/m², particularly 10 to 60 g/m².

For use in microwave cooking, for example, re-heating food, it is preferred for the base sheet to have a water pressure resistance of 100 mmH₂O or more and less than 500 mmH₂O. This is preferred because, for one thing, the resulting kitchen sheet, used between food and a dish or used to wrap food, does not allow condensation to pass therethrough and may provide the food hot and dry and, for another, the resulting kitchen sheet, used in microwave pre-cooking, does not allow the water content present with food to escape and achieves steaming easily. A water pressure resistance less than 100 mmH₂O is unfavorable because food, while heated in a microwave oven, may be swollen with condensation on the turntable.

When, in particular, the kitchen sheet has a reduced height of the unevenness and is used in microwave heating, etc., it is still preferred for the base sheet to have a water pressure resistance of 200 to 500 mmH₂O to avoid swell of food.

Where the base sheet has a water pressure resistance of 100 mmH₂O or higher and lower than 500 mmH₂O, and, in particular, where the base sheet is a laminate having the above-described ultrafine hydrophobic fiber nonwoven fabric, it is preferred for the ultrafine hydrophobic fiber nonwoven fabric to have a basis weight of 1 to 20 g/m², particularly 1 to 10 g/m², especially 1 to 5 g/m²; for the thermoplastic resin nonwoven fabric to have a basis weight of 3 to 30 g/m², particularly 3 to 15 g/m²; and for the laminate as a whole to have a basis weight of 7 to 100 g/m², particularly 7 to 50 g/m², especially 7 to 20 g/m².

In the kitchen sheet of the present invention, the base sheet made of the above-described fiber aggregate is shaped to have unevenness so as to have an apparent thickness of 1.0 mm or greater, and the kitchen sheet has a compressive recovery of 30% or more.

Since the kitchen sheet has been shaped to have unevenness so as to have a compressive recovery of 30% or more, when it is used as an underlay of food to be heated in a microwave oven, it allows water vapor exuded from food to pass and, as a result, the food can be prevented from swelling with water produced by condensation of water vapor from the food. This is the case, for example, when the kitchen sheet is set on a plate, on which cooked food, such as shaomai, gyoza, an-man, nikuman, etc. is put and re-heated in a microwave oven, or when cooked preserved food, such as frozen food, is cooked. If the compressive recovery is less than 30%, the sheet undergoes change in shape when held by hand and does not restore the original shape.

The kitchen sheet with an increased height of the unevenness can be used for cooking foods emitting much water vapor. Where food needs cooking in the presence of a fairly large amount of steam, the thickness of the base sheet can be increased to fit the need. This can be achieved by making the uneven shape resistant against collapse on handling so as to keep the thickness originally given to the base sheet. It is preferred that the kitchen sheet of the present invention for such uses has a compressive recovery of 45% or more.

Since the kitchen sheet of the present invention has the base sheet shaped to have unevenness as described above, the contact area with food is diminished, and the drops of condensation on the surface of the sheet are prevented from coming into contact with food. The shape of the unevenness is not particularly limited as long as it has concavities which connect with each other to form passageways through which water vapor generated from food can escape (concavities disposed discontinuously and regularly all over the kitchen sheet). That is, the unevenness presents passageways formed of connected concavities, playing an important role in letting water vapor generated from food escape.

When the kitchen sheet of the present invention is used to wrap in a vegetable, it reserves the water produced by condensation in the concavities of the unevenness while moderately releasing the generated water vapor. Since the water drops do not come into contact with the vegetable, the vegetable is prevented from getting rotten. Further, when food is defrosted, the kitchen sheet of the present invention can be laid under the food so that drippings can be collected in the concavities, enabling satisfactory defrosting.

When the kitchen sheet of the present invention is used as an oil filter, the unevenness serves to increase the area through which oil passes, enabling quick oil filtration. When used as a fat and oil absorbing sheet, water vapor generated from hot deep-fried foods such as tempura and fry, is quickly released through the passageways formed of the connected concavities, and the fried food is kept away from contact with water drops collecting under the fried food. As a result, the fried food keeps crisp texture.

When the kitchen sheet of the present invention is used for dishwashing or wiping clean, the unevenness makes the sheet three-dimensional, easy to hold, and fit to complicated shapes such as dishes, a sink, and a stove, making the sheet convenient to use.

The height of the unevenness (the distance from the bottom of the uneven-shaped base sheet to the inner side of the top of the convexities) is three to twenty times the thickness of the base sheet. With this height, concavities connecting with each other form necessary passageways for water vapor.

It is desirable that the height of the unevenness be as great as possible in order to widen the passageways for water vapor and to keep food away from condensation. However, from the standpoint of applicability to a diversity of uses, the height is 3 to 20 times the thickness of the base sheet.

The unevenness pattern preferably has a pitch (the distance between the peaks of adjacent convexities or between the valleys of adjacent concavities) of 3.5 to 25 mm. The pitch of the unevenness pattern is selected appropriately according to the size of the food to be cooked, depending on how many convexities are to support the food. From the size of general foods, the practical upper limit of the pitch is 50 mm.

Taking various applications into consideration, the pitch of the unevenness pattern is 3.5 to 25 mm, preferably 5.0 to 15 mm.

The apparent thickness of the kitchen sheet of the present invention (the thickness of the whole sheet inclusive of the unevenness, and more particularly the apparent thickness measured by the method described in Examples hereinafter given) is 1.0 mm or greater. If the apparent thickness is smaller than 1.0 mm, the passageways for water vapor formed of concavities connecting with each other are narrow, and the drops of condensation on the kitchen sheet come into direct contact with food. While the apparent thickness of the kitchen sheet of the present invention is desirably as great as possible in order to widen the passageways for water vapor and to keep food away from condensation, the practical upper limit for actual use is 10 mm.

For applications inclusive of waterproof paper for washing, wiping, etc., the apparent thickness of the kitchen sheet is preferably 1.0 to 10 mm. Various applications being taken into consideration, a still preferred apparent thickness is 1.0 to 5.0 mm.

The kitchen sheet of the present invention is produced by embossing a base sheet comprising a fiber aggregate, preferably hydrophobic fiber nonwoven fabric, having an air permeability of 5 cc/cm²/sec or more as measured according to JIS L1096A to form unevenness in the form of concavities being connected with each other and convexities having peaks separated by 3.5 to 25 mm, giving said kitchen sheet a height of unevenness of three to twenty times the thickness of the base sheet, an apparent thickness of 1.0 mm or greater and a compressive recovery of 30 % or more. It is preferred to use, as the fiber aggregate, a laminate composed of a sheet of ultrafine hydrophobic fiber nonwoven fabric having on at least one side thereof nonwoven fabric made of a thermoplastic resin. It is also preferred to use a base sheet having a water pressure resistance of 100 mmH₂O or more and less than 500 mmH₂O or a base sheet having a water pressure resistance of 500 mmH₂O or more.

The manner of embossing is not particularly restricted. For example, a method using an embossing machine having matched steel rolls can be used. The form of the embossing machine is not particularly limited as far as the above-described unevenness pattern can be imparted.

Preferred conditions for embossing are as follows.
Pressure: 100 to 500 kPa, particularly 200 to 300 kPa
Temperature: 50 to 180°C, particularly 70 to 120°C

The embossed pattern made by the embossing includes polka dots, checks, zigzags, dots, and stripes.

As described above, since the kitchen sheet of the present invention comprises a base sheet comprising a fiber aggregate having a prescribed air permeability and having been shaped to have unevenness so as to have a prescribed apparent thickness and a prescribed compressive recovery, it is useful in the above-described diversity of applications.

### Examples

The present invention will now be illustrated in greater detail by way of Examples, but the present invention is not construed as being limited thereto.

The methods of measurement or quantitative determination of physical properties used in Examples are shown below.
Compressive recovery:
   A kitchen sheet is compressed by applying a load of 50 gf/cm² at a stroke speed of 50 sec/min by use of KES-TB3 supplied by KATO TECH, Inc. A compressive recovery R (R(%)=(Wc'/Wc)x100) is obtained from the work of compression Wc (gfcm/cm²) and the work of recovery from compression Wc'(gfcm/cm²).
Water pressure resistance:
   Measured in accordance with JIS L1092.
Air permeability:
   Measured in accordance with JIS L1096A.
Apparent thickness:
   An acrylic plate of 4 cm² in area is fitted to the measuring part of DIAL THICKNESS GAUGE (manufactured by PEACOCK), and the thickness of a kitchen sheet of 4 cm² in area is measured.

### EXAMPLES 1 TO 3

The kitchen sheets of Examples 1 to 3 are shown in Table 1 below.

The base sheet of the kitchen sheet of Example 1 is a 3-ply laminate comprising rayon/PE air-through bonded nonwoven fabric having on both sides thereof PP spun-bonded nonwoven fabric, partially jointed into one body by heat fusion. The base sheet of the kitchen sheet of Example 2 is PP spun-bonded nonwoven fabric (a single ply). The base sheet of the kitchen sheet of Example 3 is a three-ply laminate comprising rayon/PE spunlaced nonwoven fabric having on both sides thereof PP spun-bonded nonwoven fabric, joined together by heat fusion.

The kitchen sheets of Examples 1 to 3 were obtained as follows.

Each base sheet (thickness: 0.2 mm; air permeability: shown in Table 1) was embossed through hot rolls (matched steel rolls) under a pressure of 200 kPa at a temperature of 100°C to obtain a kitchen sheet having an apparent thickness of 1.7 mm and a compressive recovery shown in Table 1. The embossed pattern was polka dots arrayed in both longitudinal and lateral directions continuously and regularly. The pitch of the bosses (the distance between the peaks of adjacent convexities) was 7.0 mm.

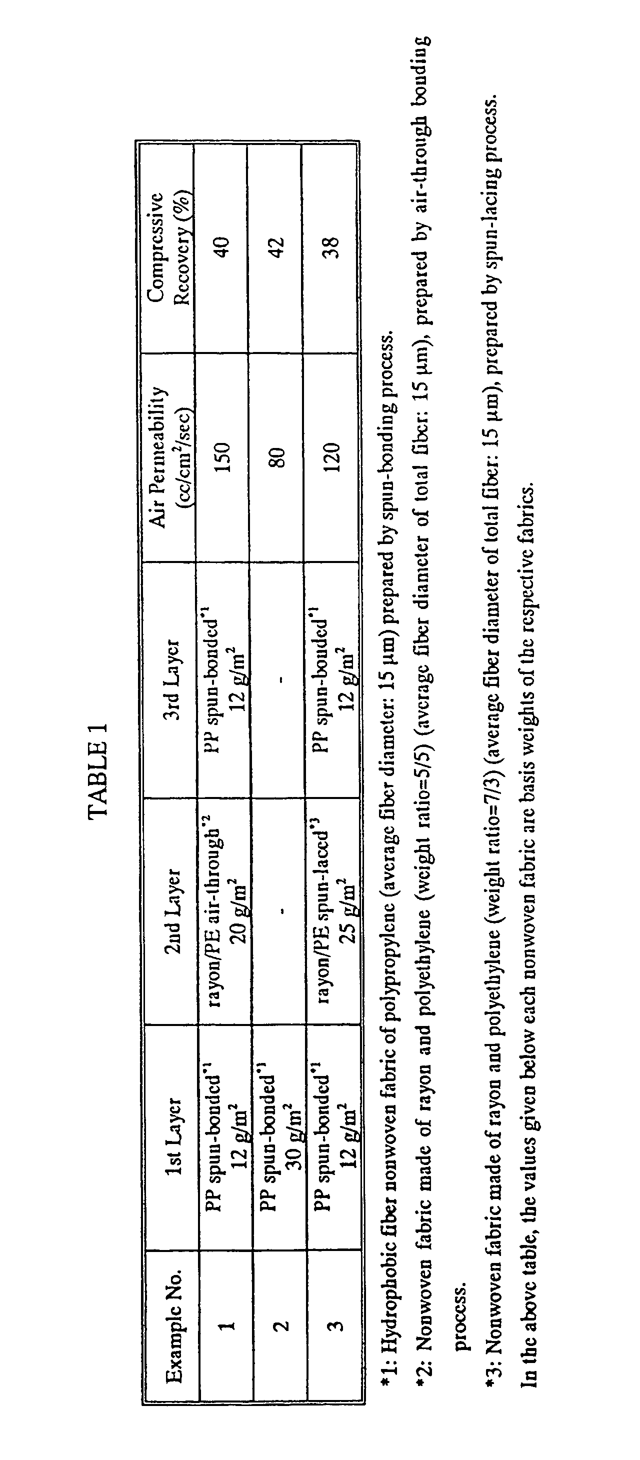

### EXAMPLES 4 TO 6

The kitchen sheets of Examples 4 to 6 are shown in Table 2 below.

The base sheets used in these kitchen sheets are three-ply laminates comprising PP melt-blown nonwoven fabric having on both sides thereof PP spun-bonded nonwoven fabric, joined together by partial heat fusion.

The kitchen sheets of Examples 4 to 6 were prepared as follows. Each base sheet (thickness: 0.2 mm; water pressure resistance and air permeability: shown in Table 2 below) was made uneven by embossing through hot rolls (matched steel rolls) under a pressure of 200 kPa at a temperature of 120°C to obtain a kitchen sheet having an apparent thickness of 1.7 mm and a compressive recovery shown in Table 2. The embossed pattern was polka dots arrayed in both longitudinal and lateral directions continuously and regularly. The pitch of the bosses (the distance between the peaks of adjacent convexities) was 7.0 mm.

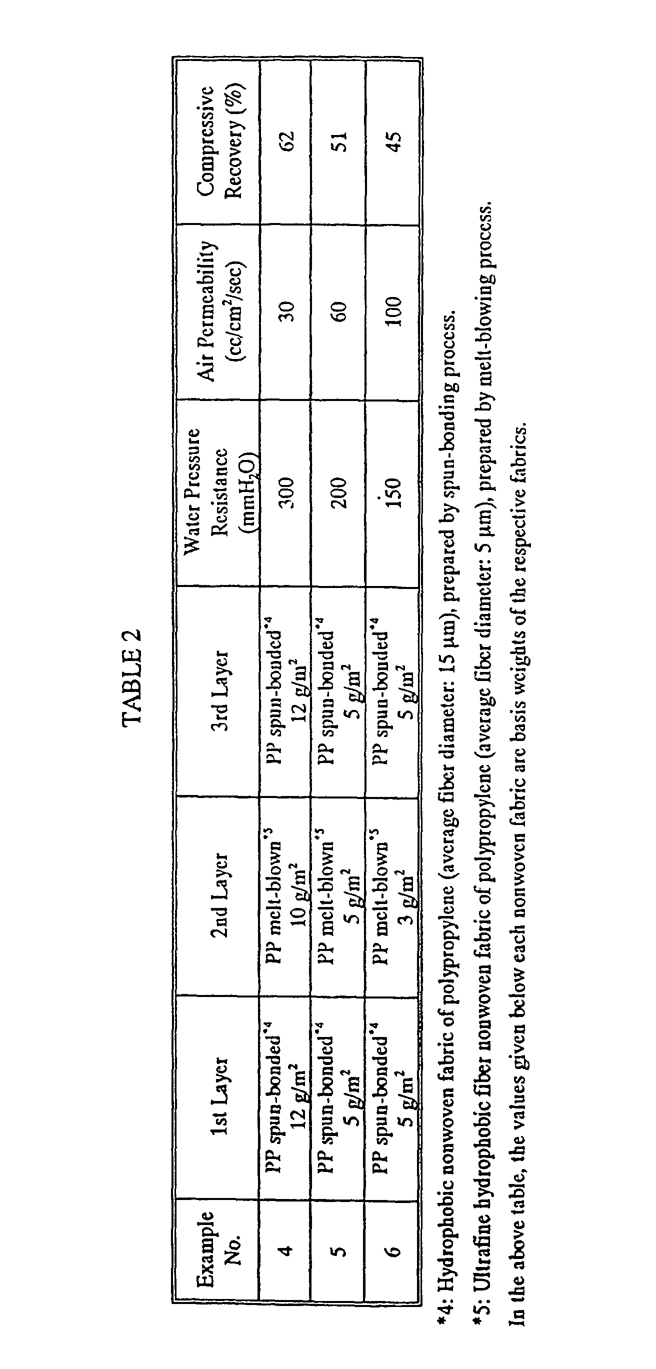

### EXAMPLES 7 TO 10

The kitchen sheets of Examples 7 to 10 are shown in Table 3 below.

The base sheets of the kitchen sheets of Examples 7, 8 and 10 are three-ply laminates comprising PP melt-blown nonwoven fabric having on both sides thereof PP spun-bonded nonwoven fabric by heat fusion. The base sheet of the kitchen sheet of Example 9 is a four-ply laminate composed of a laminate of separately prepared two PP melt-blown nonwoven webs having on both sides of the laminate PP spun-bonded nonwoven fabric, the stacked four layers simultaneously heat-fused into one body.

The kitchen sheets of Examples 7 to 10 were obtained as follows. Each base sheet (thickness: 0.2 mm; water pressure resistance and air permeability: shown in Table 3 below) was made uneven by embossing through hot rolls (matched steel rolls) under a pressure of 200 kPa at a temperature of 120°C to obtain a kitchen sheet having an apparent thickness of 1.7 mm and a compressive recovery shown in Table 3. The embossed pattern was polka dots arrayed in both longitudinal and lateral directions continuously and regularly. The pitch of the bosses (the distance between the peaks of adjacent convexities) was 7.0 mm.

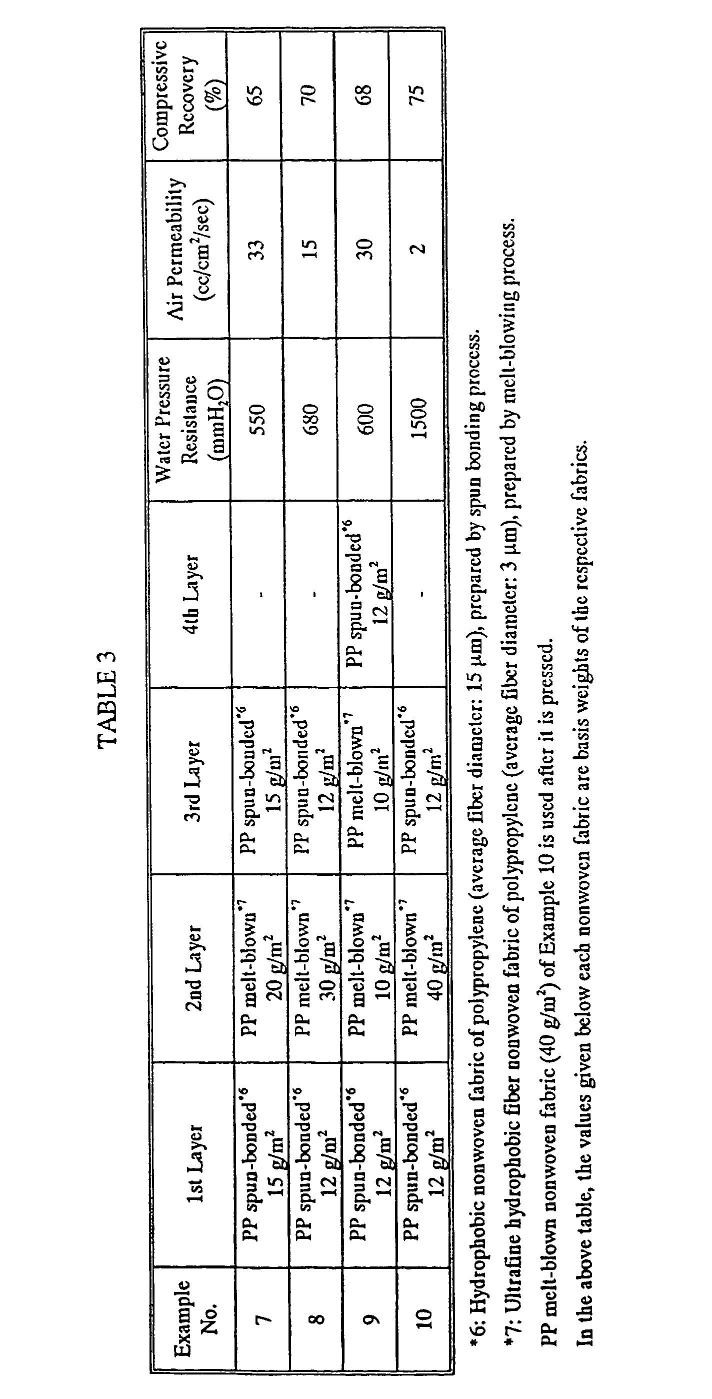

### Industrial Applicability:

The kitchen sheet according to the present invention is useful in various applications, for example, in cooking or defrosting food in a microwave oven, wrapping food such as vegetables for preservation in a refrigerator, wrapping meat, fish, etc. for preservation in a freezer, steaming food in a steamer, etc., draining off food, absorbing impurities or fat exuded from food in boiling, filtering oil, absorbing fat and oil, washing dishes, wiping a sink and a stove with a light scouring effect, and protecting dishes, etc. from breakage while storage, and as a draining sheet to remove water from garbage before discarding, as a filter of a ventilation fan, and so forth.

The process for producing a kitchen sheet of the present invention provides the above-described useful kitchen sheet.

## Claims

1. A kitchen sheet comprising a base sheet comprising a fiber aggregate, the base sheet having an air permeability of from 5 to 400 cc/cm²/sec as measured in accordance with JIS L1096A, a basis weight of from 10 to 100 g/m², and said base sheet having been shaped to unevenness in the form of concavities being connected with each other and convexities having peaks separated by 3.5 to 25 mm, giving said kitchen sheet a height of unevenness of three to twenty times the thickness of the base sheet, an apparent thickness of 1.0 mm or greater and a compressive recovery of 30 % or more.

2. A kitchen sheet according to claim 1, wherein said base sheet has a water pressure resistance of 100 mm H₂O or more and less than 500 mm H₂O as measured in accordance with JIS L1092.

3. A kitchen sheet according to claim 1, wherein said base sheet has a water pressure resistance of 500 mm H₂O or more as measured in accordance with JIS L1092.

4. A kitchen sheet according to claim 1, wherein said fiber aggregate is a laminate having two or more layers.

5. A kitchen sheet according to claim 4, wherein said two or more layers comprise a surface layer in which the fiber material is a hydrophobic fiber.

6. A kitchen sheet according to claim 4, wherein water- and oil-absorbing fibers are used as an inner layer of the laminate.

7. A kitchen sheet according to claim 4, wherein the laminate comprises a sheet of a nonwoven fabric comprising an ultrafine hydrophobic fiber having provided on at least one side thereof a nonwoven fabric comprising a thermoplastic resin.

8. A kitchen sheet according to claim 7, wherein the nonwoven fabric comprising the thermoplastic resin is made of hydrophobic fibers including polyolefin resins, polyester resins and copolymers thereof.

9. A kitchen sheet according to claim 8, wherein the polyolefin resin is selected from the group consisting of polyethylene and polypropylene and the polyester resin is selected from the group consisting of polyethylene terephthalate, polybutylene terephthalate.

10. A kitchen sheet according to claim 4, wherein the laminate comprises a combination of a nonwoven fabric comprising a hydrophobic fiber, a water- and oil-absorbing nonwoven fabric and an nonwoven fabric comprising an ultrafine hydrophobic fiber

11. A kitchen sheet according to claim 10, wherein the water- and oil-absorbing nonwoven fabric is selected from the group consiting of rayon, pulp and cotton.

12. A process for producing a kitchen sheet comprising superposing a nonwoven fabric of a thermoplastic resin on at least one side of a sheet of a nonwoven fabric comprising an ultrafine hydrophobic fiber to obtain a base sheet having a water pressure resistance of 100 mm H₂O or more and less than 500 mm H₂O as measured in accordance with JIS L1092, an air permeability of from 5 to 400 cc/cm²/sec as measured in accordance with JIS L1096A and a basis weight of from 10 to 100 g/m², and embossing the base sheet to impart unevenness in the form of concavities being connected with each other and convexities having peaks separated by 3.5 mm to 25 mm, giving said kitchen sheet a height of unevenness of three to twenty times the thickness of the base sheet, an apparent thickness of 1.0 mm or greater and a compressive recovery of 30 % or more.

13. A process for producing a kitchen sheet comprising superposing a nonwoven fabric of a thermoplastic resin on at least one side of a sheet of a nonwoven fabric comprising an ultrafine hydrophobic fiber to obtain a base sheet having a water pressure resistance of 500 mm H₂O or more as measured in accordance with JIS L 1092, an air permeability of from 5 to 400 cc/cm²/sec as measured in accordance with JIS L1096A and a basis weight of from 10 to 100 g/m², and embossing the base sheet to impart unevenness in the form of concavities being connected with each other and convexities having peaks separated by 3.5 mm to 25 mm, giving said kitchen sheet a height of unevenness of three to twenty times the thickness of the base sheet, an apparent thickness of 1.0 mm or greater and a compressive recovery of 30 % or more.

## Patentansprüche

1. Küchenfolie, umfassend eine Basisfolie, die ein Faseraggregat umfaßt, wobei die Basisfolie eine Luftdurchlässigkeit von 5 bis 400 cc/cm²/s, gemessen gemäß JIS L1096A, und ein Basisgewicht von 10 bis 100 g/m² aufweist, und die Basisfolie mit einer Unebenheit in Form von Konkavitäten, die miteinander verbunden sind, und Konvexitäten mit Peaks, die 3,5 bis 25 mm voneinander entfernt sind, geformt wurde, wodurch der Küchenfolie eine Unebenheitshöhe, die der drei- bis zwanzigfachen Dicke der Basisfolie entspricht, eine scheinbare Dicke von 1,0 mm oder größer und eine Druckregenerierung von 30 % oder mehr verliehen wird.

2. Küchenfolie nach Anspruch 1, worin die Basisfolie eine Wasserdruckfestigkeit von 100 mm H₂O oder mehr und weniger als 500 mm H₂O, gemessen gemäß JIS L1092, aufweist.

3. Küchenfolie nach Anspruch 1, worin die Basisfolie eine Wasserdruckfestigkeit von 500 mm H₂O oder mehr, gemessen gemäß JIS L1092, aufweist.

4. Küchenfolie nach Anspruch 1, worin das Faseraggregat ein Verbund mit zwei oder mehreren Schichten ist.

5. Küchenfolie nach Anspruch 4, worin die zwei oder mehreren Schichten eine Oberflächenschicht umfassen, in der das Fasermaterial eine hydrophobe Faser ist.

6. Küchenfolie nach Anspruch 4, worin wasser- und ölabsorbierende Fasern als eine innere Schicht des Verbunds verwendet werden.

7. Küchenfolie nach Anspruch 4, worin der Verbund eine Folie auf einem Vliesstoff umfaßt, der eine ultrafeine hydrophobe Faser umfaßt, die auf mindestens eine ihrer Seiten mit einem Vliesstoff, der ein thermoplastisches Harz umfaßt, versehen ist.

8. Küchenfolie nach Anspruch 7, worin der Vliesstoff, der das thermoplastische Harz umfaßt, aus hydrophoben Fasern einschließlich Polyolefinharzen, Polyesterharzen und Copolymeren davon hergestellt ist.

9. Küchenfolie nach Anspruch 8, worin das Polyolefinharz aus der Gruppe ausgewählt ist, die aus Polyethylen und Polypropylen besteht, und das Polyesterharz aus der Gruppe ausgewählt ist, die aus Polyethylenterephthalat und Polybutylenterephthalat besteht.

10. Küchenfolie nach Anspruch 4, worin der Verbund eine Kombination aus einem Vliesstoff, der eine hydrophobe Faser umfaßt, einem wasser- und ölabsorbierenden Vliesstoff und einem Vliesstoff umfassend eine ultrafeine hydrophobe Faser umfaßt.

11. Küchenfolie nach Anspruch 10, worin der wasser- und ölabsorbierende Vliesstoff aus der Gruppe ausgewählt ist, die aus Reyon, Zellstoff und Baumwolle besteht.

12. Verfahren zur Herstellung einer Küchenfolie, umfassend das Überlagern eines Vliesstoffs aus einem thermoplastischen Harz auf mindestens einer Seite einer Folie aus einem Vliesstoff, der eine ultrafeine hydrophobe Faser umfaßt, um eine Basisfolie mit einer Wasserdruckfestigkeit von 100 mm H₂O oder mehr und weniger als 500 mm H₂O, gemessen gemäß JIS L1092, einer Luftdurchlässigkeit von 5 bis 400 cc/cm²/s, gemessen gemäß JIS L1096A, und einem Basisgewicht von 10 bis 100 g/m² zu erhalten, und das Prägen der Basisfolie, um eine Unebenheit in Form von Konkavitäten, die miteinander verbunden sind, und Konvexitäten mit Peaks, die 3,5 mm bis 25 mm voneinander entfernt sind, zu erzeugen, wodurch der Küchenfolie eine Unebenheitshöhe, die der dreifachen bis zwanzigfachen Dicke der Basisfolie entspricht, eine scheinbare Dicke von 1,0 mm oder größer und eine Druckregenerierung von 30 % oder mehr verliehen wird.

13. Verfahren zur Herstellung einer Küchenfolie, umfassend das Überlagern eines Vliesstoffs aus einem thermoplastischen Harz auf mindestens einer Seite einer Folie aus einem Vliesstoff, der eine ultrafeine hydrophobe Faser umfaßt, um eine Basisfolie mit einer Wasserdruckfestigkeit von 500 mm H₂O oder mehr, gemessen gemäß JIS L1092, einer Luftdurchlässigkeit von 5 bis 400 cc/cm²/s, gemessen gemäß JIS L1096A, und einem Basisgewicht von 10 bis 100 g/m² zu erhalten, und das Prägen der Basisfolie, um eine Unebenheit in Form von Konkavitäten, die miteinander verbunden sind, und Konvexitäten mit Peaks, die 3,5 mm bis 25 mm voneinander entfernt sind, zu erzeugen, wodurch der Küchenfolie eine Unebenheitshöhe, die der dreifachen bis zwanzigfachen Dicke der Basisfolie entspricht, eine scheinbare Dicke von 1,0 mm oder größer und eine Druckregenerierung von 30 % oder mehr verliehen wird.

## Revendications

1. Feuille de cuisine comprenant une feuille de base comprenant un agrégat de fibres, la feuille de base ayant une perméabilité à l'air de 5 à 400 cc/cm²/sec comme mesuré en conformité avec JIS L1096A, un poids de base de 10 à 100 g/m², et ladite feuille de base étant formée pour être irrégulière sous la forme de concavités étant connectée les unes aux autres et de convexités ayant des crêtes séparées de 3,5 à 25 mm, donnant à ladite feuille de cuisine une hauteur d'irrégularité de trois à vingt fois l'épaisseur de la feuille de base, une épaisseur apparente de 1,0 mm ou plus et une récupération à la compression de 30 % ou plus.

2. Feuille de cuisine selon la revendication 1, dans laquelle ladite feuille de base présente une résistance à la pression de l'eau de 100 mm H₂O ou plus et moins que 500 mm H₂O comme mesuré en conformité avec JIS L1092.

3. Feuille de cuisine selon la revendication 1, dans laquelle ladite feuille de base a une résistance à la pression de l'eau de 500 mm H₂O ou plus comme mesuré en conformité avec JIS L1092.

4. Feuille de cuisine selon la revendication 1, dans laquelle ledit agrégat de fibres est un stratifié ayant deux ou plus de deux couches.

5. Feuille de cuisine selon la revendication 4, dans laquelle les deux ou plus de deux couches comprennent une couche surfacique dans laquelle le matériau de fibre est une fibre hydrophobe.

6. Feuille de cuisine selon la revendication 4, dans laquelle des fibres absorbant l'eau et l'huile sont utilisées comme couche interne du stratifié.

7. Feuille de cuisine selon la revendication 4, dans laquelle le stratifié comprend une feuille de tissu non tissé comprenant une fibre hydrophobe ultrafine ayant disposé sur au moins un de ses côtés un tissu non tissé comprenant une résine thermoplastique.

8. Feuille de cuisine selon la revendication 7, dans laquelle le tissu non tissé comprenant la résine thermoplastique est constitué de fibres hydrophobes incluant des résines polyoléfines, des résines polyesters et leurs copolymères.

9. Feuille de cuisine selon la revendication 8, dans laquelle la résine polyoléfine est choisie dans le groupe constitué du polyéthylène et du polypropylène et la résine de polyester est choisi dans le groupe constitué du poly (téréphtalate d'éthylène), du poly(téréphtalate de butylène).

10. Feuille de cuisine selon la revendication 4, dans laquelle le stratifié comprend une combinaison d'un tissu non tissé comprenant une fibre hydrophobe, d'un tissu non tissé absorbant l'eau et l'huile et d'un tissu non tissé comprenant une fibre hydrophobe ultrafine.

11. Feuille de cuisine selon la revendication 10, dans laquelle le tissu non tissé absorbant l'eau et l'huile est choisi dans le groupe constitué de rayonne, de pâte et de coton.

12. Procédé pour la production d'une feuille de cuisine comprenant la superposition d'un tissu non tissé d'une résine thermoplastique sur au moins un côté d'une feuille d'un tissu non tissé comprenant une fibre hydrophobe ultrafine pour obtenir une feuille de base ayant une résistance à la pression de l'eau de 100 mm H₂O ou plus et moins que 500 mm H₂O comme mesuré en conformité avec JIS L1092, une perméabilité à l'air de 5 à 400 cc/cm²/sec comme mesuré en conformité avec JIS L1096A et un poids de base de 10 à 100 g/m², et le gaufrage de la feuille de base pour communiquer une irrégularité sous la forme de concavités qui sont connectées les unes aux autres et de convexités ayant des crêtes séparées de 3,5 mm à 25 mm, donnant à ladite feuille de cuisine une hauteur d'irrégularité de trois à vingt fois l'épaisseur de la feuille de base, une épaisseur apparente de 1,0 mm ou plus et une récupération à la compression de 30 % ou plus.

13. Procédé pour la production d'une feuille de cuisine comprenant la superposition d'un tissu non tissé d'une résine thermoplastique sur au moins un côté d'une feuille d'un tissu non tissé comprenant une fibre hydrophobe ultrafine pour obtenir une feuille de base ayant une résistance à la pression de l'eau de 500 mm H₂O ou plus comme mesuré en conformité avec JIS L1092, une perméabilité à l'air de 5 à 400 cc/cm²/sec comme mesuré en conformité avec JIS L1096A et un poids de base de 10 à 100 g/m², et le gaufrage de la feuille de base pour communiquer une irrégularité sous la forme de concavités qui sont connectées les unes aux autres et de convexités ayant des crêtes séparées de 3,5 mm à 25 mm, donnant à ladite feuille de cuisine une hauteur d'irrégularité de trois à vingt fois l'épaisseur de la feuille de base, une épaisseur apparente de 1,0 mm ou plus et une récupération à la compression de 30 % ou plus.
